Europäisches Patentamt

European Patent Office

Office européen des brevets

(19)

(11) Numéro de publication : **0 032 867
B1**

# FASCICULE DE BREVET EUROPÉEN

(12)

(45) Date de publication du fascicule du brevet :
13.06.84

(21) Numéro de dépôt : 81400076.6

(22) Date de dépôt : 21.01.81

(51) Int. Cl.³ : **G 05 B 19/42, C 03 B 33/04**

(54) **Procédé et dispositif pour la correction du programme de commande d'une machine automatique de découpe de feuilles de verre.**

(30) Priorité : 21.01.80 DE 3001954

(43) Date de publication de la demande :
29.07.81 Bulletin 81/30

(45) Mention de la délivrance du brevet :
13.06.84 Bulletin 84/24

(84) Etats contractants désignés :
BE CH DE FR GB IT LI LU NL SE

(56) Documents cités :
CH-A-  445 609
DE-A- 1 463 629
DE-A- 2 008 204
DE-A- 2 723 689

(73) Titulaire : **SAINT-GOBAIN VITRAGE**
**Les Miroirs 18, avenue d'Alsace**
**F-92400 Courbevoie (FR)**
**BE CH FR GB IT LI LU NL SE**
**VEGLA Vereinigte Glaswerke GmbH**
**Viktoria Allee 3-5**
**D-5100 Aachen (DE)**
**DE**

(72) Inventeur : **Reinmold, Heinz Josef**
**Schervierstrasse 6**
**D-5100 Aachen (DE)**
Inventeur : **Mucha, Horst**
**Severinstrasse 22**
**D-5100 Aachen (DE)**
Inventeur : **Arnoldi, Wilhelm**
**Ronheider Berg 243**
**D-5100 Aachen (DE)**

(74) Mandataire : **Eudes, Marcel et al**
**Saint-Gobain Recherche 39 Quai Lucien Lefranc**
**F-93304 Aubervilliers Cedex (FR)**

## Description

L'invention concerne la mise en mémoire d'un programme pour guider à l'aide d'impulsions, une machine de découpe de feuilles de verre, suivant une trajectoire repérée en coordonnées cartésiennes X et Y.

Pour enregistrer le programme, on guide le long d'un modèle représentant le profil de découpe, une tête d'exploration munie d'un émetteur d'impulsions X représentatives des coordonnées X des différents points du modèle et d'un émetteur d'impulsions Y représentatives des coordonnées Y des différents points du modèle. Ces impulsions X et Y constituent des signaux représentatifs du profil de découpe, on les met en mémoire et il suffit ensuite de lire cette mémoire pour commander la machine de découpe.

La demande de brevet français publiée sous le numéro 2 367 710 décrit une telle machine de découpe de feuilles de verre, commandée par une bande magnétique porteuse d'informations sur les coordonnées X et Y des différents points du profil de découpe. La même machine de découpe de ce genre peut également être utilisée pour réaliser l'enregistrement du programme de découpe sur bande magnétique ; ceci est décrit dans la demande de brevet allemande numéro 2 646 053.

La demande allemande DE OS P 28 50 127 décrit un dispositif pour enregistrer un programme de découpe destiné à une telle machine de découpe. Dans un tel dispositif, la tête d'exploration suit le contour d'un modèle grâce à un palpeur. En théorie, lorsque la tête d'exploration a suivi tout le contour du modèle, elle se trouve à nouveau au point d'où elle est partie pour commencer le processus d'exploration. En pratique, que la tête d'exploration soit entraînée manuellement ou commandée automatiquement, cela n'est pas tout à fait vrai et il subsiste un léger décalage entre le point de départ de l'exploration et la fin de l'exploration. Si le point de départ, ou point zéro, n'est pas atteint exactement après l'exploration, cela se traduit dans le programme enregistré, par un écart entre la consigne de départ et la consigne d'arrivée. Lorsqu'on exploite le programme enregistré pour guider la machine de découpe, ce léger écart se traduit, sur une feuille découpée prise individuellement par un décalage insignifiant du trait de découpe, de l'ordre de 0,1 mm, décalage même pas décelable à l'œil nu. Mais étant donné que le point d'arrivée de la tête de découpe est en même temps son point de départ pour la découpe suivante, ces décalages s'additionnent à chaque opération de découpe d'une nouvelle feuille de verre, si bien qu'à la longue, l'outil de découpe est entraîné hors de la plaque de verre dans laquelle on veut découper un vitrage.

Dans le cadre de la technique antérieure mentionnée, l'invention vise à éviter ces décalages, en faisant en sorte que, dans le programme enregistré, la consigne correspondant au point de départ d'une ligne fermée de découpe soit exactement la même consigne correspondant au point d'arrivée après parcours de ladite ligne de découpe.

Selon l'invention, ce problème est résolu, à l'enregistrement du programme de découpe, en additionnant les signaux de trajectoire sous forme d'impulsions, positives ou négatives suivant que la tête d'exploration se déplace dans le sens positif ou négatif des axes de coordonnées X et Y lorsqu'elle parcourt le profil de découpe modèle, dans des compteurs séparés pour X et Y, en contrôlant le total des compteurs au point de départ et au point d'arrivée de la tête d'exploration, en introduisant dans le programme le nombre voulu d'impulsions pour que les totaux des compteurs soient identiques au départ et à l'arrivée du parcours de la tête d'exploration.

Ainsi, l'invention s'écarte de la voie suivie antérieurement qui était de trouver le point zéro à l'aide de la tête d'exploration. Au contraire, maintenant on accepte des décalages en X et/ou en Y entre la position de départ et la position d'arrivée de la tête d'exploration et on corrige au niveau de la mémoire, le programme enregistré en y envoyant à l'aide d'émetteurs d'impulsions, des impulsions supplémentaires. Ceci permet d'éviter l'emploi d'une machine de programmation de haute précision, qui serait très coûteuse.

L'invention propose également un dispositif pour mettre en œuvre ce procédé de correction du programme.

Ce dispositif comporte essentiellement, en plus des moyens électroniques de mémorisation d'impulsions, des compteurs d'impulsions additionneurs, un pour les impulsions de commande du déplacement suivant l'axe des X, et un autre pour les impulsions commandant le déplacement suivant l'axe des Y, et des générateurs d'impulsions supplémentaires qui entrent en action à la fin de l'enregistrement du programme lorsque la tête de déplacement est à son point arrivée, si les comptes portés sur chaque compteur sont différents des comptes portés par les mêmes compteurs avant l'enregistrement quand la tête d'exploration était à son point de départ.

L'appareil peut être conçu pour la manœuvre manuelle. En pareil cas donc, les impulsions de commande manquantes sont appliquées manuellement, en nombre indiqué par le compte du compteur et avec le signe indiqué également par celui-ci.

Selon un mode d'exécution particulièrement avantageux de l'invention, on propose un circuit automatique de recherche du point zéro, sous la forme d'un circuit logique combiné avec le circuit d'enregistrement. Dans ce mode d'exécution préférentiel, une intervention manuelle n'est plus nécessaire, l'appareil complète lui-même automatiquement le programme de découpe, par le nombre de signaux qui manquent encore éventuellement, pour rattraper les nombres marqués aux compteurs au point de départ de la tête d'exploration.

L'invention sera maintenant décrite en détail, en référence aux dessins qui représentent :

figure 1 un schéma d'une installation d'enregistrement du programme de découpe ;

figure 2 un schéma d'un circuit électronique pour la mise en œuvre manuelle du procédé de correction ;

figure 3 un schéma d'un circuit pour la correction automatique du programme de découpe.

La partie mécanique de l'installation d'enregistrement du programme de découpe comprend une table 1, des glissières 2, 3 disposées sur les deux côtés longitudinaux de cette table, un pont 4 qui peut se déplacer le long de ces glissières 2, 3 dans la direction X et un chariot coulissant 5 qui peut se déplacer le long du pont 4 dans la direction Y.

Sur le chariot 5 est disposée une tête d'exploration 7. Celle-ci est guidée sur la courbe à programmer 8. Le mouvement ainsi exécuté par le chariot 5 est transmis à deux émetteurs d'impulsions tournants 9 et 10. Ces impulsions, fournies par les émetteurs 9 et 10 sont des signaux représentatifs de la courbe modèle le long de laquelle on déplace la tête d'exploration. Ces signaux sont transmis à un dispositif de mémorisation 13 par les lignes 11 et 12 représentées schématiquement.

Le dispositif de mémorisation 13 comprend un microprocesseur d'enregistrement, un enregistreur à bande magnétique constituant la mémoire proprement dite. Le microprocesseur d'enregistrement a pour fonction de transformer les signaux venant des émetteurs d'impulsions en signaux mémorisés sur la bande magnétique, qui lors de l'exploitation du programme pour faire des découpes de feuilles de verre, seront lisibles par un lecteur de bande magnétique.

La courbe 8 correspond à la forme du vitrage à découper dans les plaques de verre, et elle peut être une ligne dessinée par exemple sur un carton bristol. Le chariot 5 peut être guidé manuellement sur la courbe 8, toutefois il est aussi possible de prévoir une commande automatique de déplacement du chariot le long de la trajectoire 8.

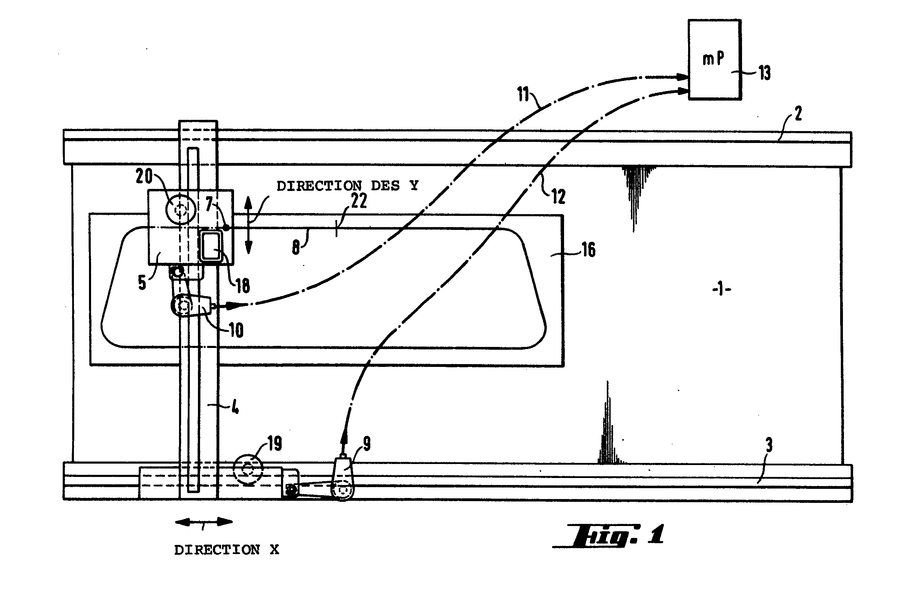

Une telle commande de trajectoire est représentée schématiquement sur la figure 1. Elle comprend le dispositif suiveur de trajet 18 prévu sur le chariot 5, un moteur d'entraînement 19 assurant le mouvement du pont 4 dans la direction X et un moteur d'entraînement 20 assurant le mouvement du chariot 5 dans la direction Y, c'est-à-dire le long du pont 4, les deux moteurs d'entraînement 19 et 20 étant munis de pignons qui engrènent sur des crémaillères disposées parallèlement aux glissières 3 et 4.

Sur la courbe 8 est disposé un point repère 22, lisible par la tête d'exploration, point qui constitue l'origine du parcours de la tête et le début du programme enregistré et qui constitue en même temps la fin de la trajectoire de la tête et qui, lorsqu'il est lu en fin de parcours, commande la fin du déplacement.

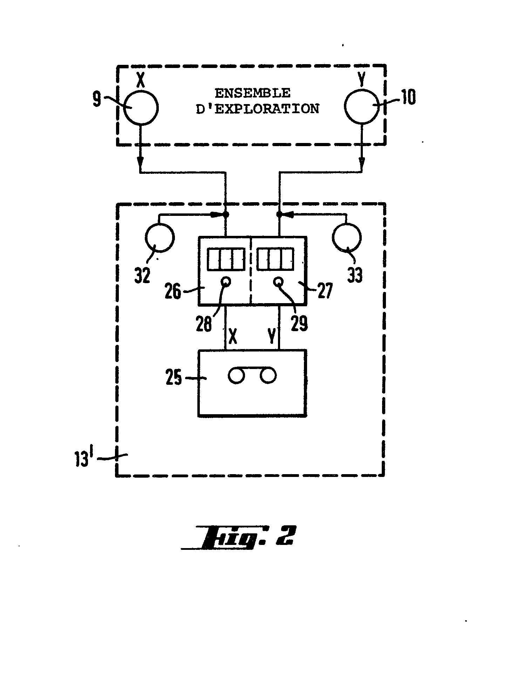

Dans le dispositif de mémorisation 13' qui est représenté sur la figure 2, les signaux venant de l'émetteur d'impulsions 9 pour la direction X sont amenés non seulement à une mémoire proprement dite 25 formée du microprocesseur d'enregistrement et de l'enregistreur à bande magnétique, mais en outre à un compteur différentiel 26, à deux sens de rotation. Si par exemple les signaux d'aller sont formés d'impulsions positives et les signaux de retour d'impulsions négatives, ces impulsions de signe différent sont additionnées. De même, les signaux venant de l'émetteur d'impulsion 10 pour la direction Y sont amenés à un compteur différentiel à deux sens 27. Au point de départ de la tête d'exploration, c'est-à-dire avant le début de l'exploration de la courbe 8, les deux compteurs 26, 27 sont à 0. Au démarrage de la tête d'exploration selon le sens de rotation des deux émetteurs d'impulsions 9, 10, des impulsions positives ou négatives sont introduites dans la mémoire 25 et dans les compteurs 26 et 27. Etant donné que les compteurs 26 et 27 sont des compteurs additionneurs, il faut qu'une fois la courbe 8 parcourue, si le point de départ est exactement atteint, il apparaisse à nouveau 0 comme somme de toutes les impulsions, à chaque compteur, aussi bien pour la direction X que pour la direction Y. Toutefois, en pratique, quelques impulsions en trop ou en moins sont généralement données dans un sens ou dans l'autre, de sorte qu'il reste dans chaque compteur quelques valeurs positives ou négatives, par exemple de l'ordre de cinq impulsions, ce qui correspond à un parcours d'environ 0,1 mm. Ce sont les affichages 28 et 29 qui indiquent s'il s'agit d'écarts positifs ou négatifs.

En parallèle à l'émetteur d'impulsions 9 est prévu, pour la direction X, un générateur d'impulsions 32, et pour la direction Y, en parallèle à l'émetteur d'impulsions 10, un générateur d'impulsions indépendant 33. Ces générateurs d'impulsions 32 et 33 peuvent, comme les émetteurs d'impulsions 9 et 10, donner des impulsions positives et négatives. Si maintenant, une fois la courbe parcourue, il reste dans le compteur 26 un signal positif, on règle et on met en action manuellement le générateur d'impulsions 32 pour fournir des impulsions négatives et il reste en action jusqu'à ce que s'établisse dans le compteur 26, la valeur 0. On procède ensuite de la même façon pour la direction Y s'il reste dans le compteur 27 une valeur différente de zéro ; en mettant en action le générateur d'impulsions 33.

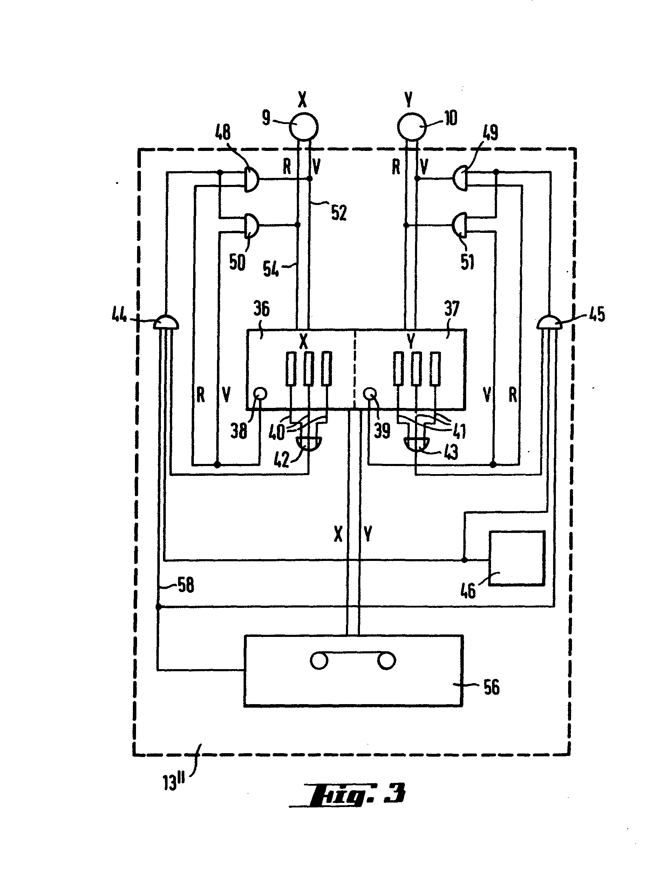

Dans le circuit de recherche automatique du point de départ représenté par la figure 3, un compteur additionneur à deux sens 36 est à nouveau prévu dans le dispositif de mémorisation 13" pour la direction X, et un autre 37 pour la direction Y. Les deux compteurs 36 et 37 sont représentés avec trois décades. Ils comportent un circuit logique qui reconnaît le signe de la valeur existante et l'indique dans les affichages 38 et 39. Si par exemple, il existe encore dans une décade du compteur 36 une valeur différente de zéro, cette valeur correspond à un signal de tension.

Ce signal de tension est transmis par la ligne correspondante 40 à l'élément porte OU 42. La sortie de cette porte OU 42 est appliquée à l'entrée de la porte ET 44. La deuxième entrée de cette porte ET 44 est reliée au générateur d'impulsions 46. La sortie de l'élément ET 44 est reliée aux entrées de deux éléments ET 48 et 50. L'élément ET 48 fournit des impulsions négatives sur la ligne 52 tandis que l'élément ET 50 transmet des impulsions positives à la ligne 54. L'autre entrée des deux éléments ET 48, 50 est reliée à l'affichage 38 du compteur 36. Cet affichage 38 émet un signal de reconnaissance qui indique si la valeur indiquée par le compteur est une valeur positive ou négative. Si la valeur numérique indiquée est par exemple positive, l'élément ET est ainsi ouvert. Par suite, les signaux fournis par le générateur d'impulsions 46 sont transmis par l'intermédiaire de l'élément ET 48 sur la ligne 52, ce qui fait que d'une part le compteur 36 est ramené à 0 et que d'autre part, le programme mémorisé dans la mémoire proprement dite 56 est complété par ces signaux supplémentaires.

Aussitôt que le compteur 36 atteint la valeur 0, les lignes 40 sont dépourvues de tension de sorte que l'élément ET 44 est inhibé. Cela signifie que le processus de correction dans le circuit X est terminé. La troisième ligne d'entrée 58 de l'élément ET 44 est reliée au système d'enregistrement magnétique proprement dit de la mémoire 56. Par suite, l'élément ET 44 et donc l'ensemble du circuit électronique de recherche du zéro ne sont ouverts que si le processus d'enregistrement proprement dit ou de programmation est terminé parce que le dessin modèle a été parcouru.

Le circuit logique de combinaison agissant sur la direction Y fonctionne de la même façon, ce circuit comprenant l'élément OU 43 alimenté par les tensions régnant dans le compteur 37, l'élément ET 45 placé à la suite et les deux éléments ET 49 et 51. Le processus de correction dans le circuit Y se déroule en même temps que le processus de correction dans le circuit X. Aussitôt que les deux éléments ET 44 et 45 sont inhibés, les deux compteurs 36 et 37 indiquent la valeur 0 et l'ensemble du processus de correction du programme mémorisé dans la mémoire 56 est terminé

## Revendications

1. Procédé de mise en mémoire d'un programme pour guider à l'aide d'impulsions une machine de découpe de feuilles de verre dans lequel on guide une tête d'exploration munie d'un émetteur d'impulsions X et d'un émetteur d'impulsions Y, le long d'une trajectoire fermée repérée en coordonnées cartésiennes X et Y représentant la ligne suivant laquelle devront s'effectuer les découpes, et dans lequel on mémorise les signaux émis par les deux émetteurs d'impulsions, caractérisé en ce que :

— on additionne dans des compteurs séparés pour X et pour Y les signaux de trajectoire sous forme d'impulsions positives ou négatives suivant que la tête d'exploration se déplace dans le sens positif ou négatif des axes X et Y lorsqu'elle parcourt la trajectoire fermée ;

— on contrôle le total des compteurs au point de départ et au point d'arrivée de la tête d'exploration dans son parcours de la trajectoire fermée ;

— on introduit dans le programme, le nombre voulu d'impulsions pour que les totaux des compteurs soient identiques au départ et à l'arrivée de la tête d'exploration après parcours de sa trajectoire fermée.

2. Dispositif pour la mise en œuvre du procédé selon la revendication 1, comportant une tête d'exploration (7) disposée sur un chariot coulissant à mouvements croisés (5) destinée à parcourir le modèle du tracé de découpe suivant une courbe fermée (8) à laquelle sont adjoints un émetteur d'impulsions d'axe X (9) fournissant des impulsions de trajectoires positives (d'aller) et négatives (de retour) et un émetteur d'impulsions d'axe Y (10) fournissant des impulsions de trajectoire positives (d'aller) et négatives (de retour) ainsi que des moyens électroniques de mémorisation des impulsions, caractérisé en ce que aux moyens électroniques de mémorisation sont adjoints un compteur (26, 36) additionneur d'impulsions X, un compteur (27, 37) additionneur d'impulsions Y ainsi qu'au moins un générateur d'impulsions supplémentaires (32, 33, 46) qui à la fin de la course de la tête d'exploration, si les comptes des compteurs s'écartent de leur valeur initiale, introduit dans la mémoire le nombre voulu d'impulsions pour que les totaux des compteurs soient identiques au départ et à l'arrivée du parcours de la tête d'exploration.

3. Dispositif selon la revendication 2, caractérisé en ce que les générateurs d'impulsions (32, 33) sont commandés manuellement.

4. Dispositif selon la revendication 2, caractérisé en ce que après la fin de la trajectoire de la tête d'exploration (7), le générateur d'impulsions (46) est commandé par les valeurs qui restent dans les deux compteurs d'impulsions additionneurs (36, 37).

5. Dispositif selon la revendication 4, caractérisé en ce qu'il comporte un circuit logique comprenant un élément OU (42, 43) alimenté par le signal de tension correspondant au compte du compteur correspondant (36, 37) et dont la sortie est appliquée à une entrée d'un élément ET (44, 45) dont la deuxième entrée est reliée au générateur d'impulsions (46), la sortie de cet élément ET (44, 45) étant appliquée aux entrées de deux autres éléments ET (48, 50, 49, 51) dont l'autre entrée reçoit le signal de signe (38, 39) du compteur (36, 37).

6. Dispositif selon la revendication 5, caractérisé en ce qu'une troisième entrée de l'élément ET (44, 45) est reliée au système d'enregistrement (56).

## Claims

1. Method of loading a memory with a programme for guiding by means of impulses a machine for cutting glass sheets in which a scanning head provided with an X impulse emitter and a Y impulse emitter is guided along a closed path defined in Cartesian coordinates X and Y representing the line along which cuts are to be made, and in which the signals emitted by the two impulse emitters are memorised, characterised in that :
— there are added in separate counters for X and for Y the path signals in the form of impulses which are positive or negative according to whether the scanning head is displaced in the positive or negative direction of the axes X and Y as it follows the closed path ;
— the totals in the counters are inspected at the point of starting and the point of finishing of the travel of the scanning head in the closed path ;
— and there is introduced into the programme the required number of impulses such that the totals in the counters are identical at the point of starting and the point of finishing of the travel of the scanning head in the closed path.

2. Device for carrying out a method according to claim 1, comprising a scanning head (7) arranged on a carriage slidable in orthogonal directions (5) intended to follow a model line of cut in a closed curve (8) to which are attached an impulse emitter for axis X (9) providing path impulses which are positive (forward) and negative (reverse) and an impulse emitter for axis Y (10) providing path impulses which are positive (forward) and negative (reverse) and electronic means for memorizing the impulses, characterised in that to the electronic means for memorisation are connected a counter (26, 36) for adding the X impulses, a counter (27, 37) for adding the Y impulses, and at least one generator for supplementary impulses (32, 33, 46) which, at the end of the path of the scanning head, if the counts recorded by the counters differ from their initial values, introduces into the memory the number of impulses required for the totals in the counters to be identical at the start anf finish of the path of the scanning head.

3. Device according to claim 2, characterised in that the impulse generators (32, 33) are manually controlled.

4. Device according to claim 2, characterised in that after the end of the path of the scanning head (7), the impulse generator (46) is controlled by the values which remain in the two counters for adding impulses (36, 37).

5. Device according to claim 4, characterised in that it comprises a logic circuit comprising an OR element (42, 43) fed by a signal of voltage corresponding to the count in the corresponding counter (36, 37) and of which the output is applied to the input of an AND element (44, 45) of which the second input is connected to the impulse generator (46), the output from this AND element (44, 45) being applied to the inputs of two other AND elements (48, 50, 49, 51) of which the other input receives the sign signal (38, 39) of the counter (36, 37).

6. Device according to claim 5, characterised in that a third input of the AND element (44, 45) is connected to a recording system (56).

## Ansprüche

1. Verfahren zum Speichern eines Programms für eine impulsgesteuerte Schneidmaschine für Glasscheiben, bei dem ein mit einem X-Impulsgeber und mit einem Y-Impulsgeber versehener Abtastkopf entlang einer geschlossenen, innerhalb X- und Y-Koordinaten liegenden Kurvenbahn geführt wird, die die Linie darstellt, entlang derer die Schnittlinien auszuführen sind, dadurch gekennzeichnet, daß
— in getrennten Zählern für die X- und die Y-Achse die Wegsignale in Form von positiven und negativen Impulsen entsprechend dem Weg des Abtastkopfes im positiven oder negativen Sinn der X- und der Y-Achse addiert werden, während der Abtastkopf die geschlossene Kurvenbahn durchläuft ;
— daß der Zählerstand im Startpunkt und in der Endstellung des Abtastkopfes auf seinem Weg über die geschlossene Kurvenbahn kontrolliert wird, und
— daß in das Programm so viele zusätzliche Impulse eingegeben werden, daß der Zählerstand jedes Zählers im Startpunkt und in der Endstellung des Abtastkopfes nach dem Durchlaufen der geschlossenen Kurvenbahn identisch ist.

2. Vorrichtung zur Durchführung des Verfahrens nach Anspruch 1, mit einem auf einem Kreuzschlitten (5) angeordneten Abtastkopf (7) zum Abtasten der Bahn der Schneidspur entlang einer geschlossenen Kurve (8), dem ein positive (vorwärts) und negative (rückwärts) Wegimpulse liefernder Impulsgeber (9) für die X-Achse, und ein positive (vorwärts) und negative (rückwärts) Wegimpulse liefernder Impulsgeber (10) für die Y-Achse zugeordnet sind, und mit elektronischen Einrichtungen für die Impulsspeicherung, dadurch gekennzeichnet, daß den elektronischen Einrichtungen für die Impulsspeicherung ein Additionsimpulszähler (26 ; 36) für die X-Achse, ein Additionsimpulszähler (27 ; 37) für die Y-Achse, und wenigstens ein zusätzlicher Impulsgenerator (32, 33 ; 46) zugeordnet sind, der, wenn am Ende des Weges des Abtastkopfes der Zählerstand von dem Ausgangswert abweicht, in den Speicher die erforderliche Anzahl von Impulsen eingibt, damit der Zählerstand jedes Zählers am Ende des Weges des Abtastkopfes mit dem Ausgangswert im Startpunkt übereinstimmt.

3. Vorrichtung nach Anspruch 2, dadurch gekennzeichnet, daß die Impulsgeneratoren (32, 33) von Hand steuerbar sind.

4. Vorrichtung nach Anspruch 2, dadurch gekennzeichnet, daß nach Beendigung des Weges des Abtastkopfes (7) der Impulsgeber (46) von den in den beiden Additionsimpulszählern (36, 37) verbleibenden Werten gesteuert wird.

5. Vorrichtung nach Anspruch 4, dadurch gekennzeichnet, daß sie eine logische Verknüpfungsschaltung aufweist, die ein von einem dem Zählerstand des zugehörigen Zählers (36, 37) entsprechenden Spannungsignal angesteuertes ODER-Glied (42, 43) umfaßt, dessen Ausgang auf einen Eingang eines UND-Gliedes (44, 45) geschaltet ist, dessen zweiter Eingang mit dem Impulsgenerator (46) verbunden ist, wobei der Ausgang dieses UND-Gliedes (44, 45) an den Eingängen zweier weiterer UND-Glieder (48, 50, 49, 51) liegt, deren anderer Eingang das Vorzeichensignal (38, 39) des Zählers (36, 37) erhält.

6. Vorrichtung nach Anspruch 5, dadurch gekennzeichnet, daß ein dritter Eingang des UND-Gliedes (44, 45) mit dem Speichersystem (56) verbunden ist.

DIRECTION DES Y

DIRECTION X

Fig. 1

0 032 867

ENSEMBLE
D'EXPLORATION

*Fig. 2*

*Fig. 3*